(19)

Europäisches Patentamt

European Patent Office

Office européen des brevets

(11) **EP 3 852 070 A1**

(12) **EUROPEAN PATENT APPLICATION**
published in accordance with Art. 153(4) EPC

(43) Date of publication:
**21.07.2021 Bulletin 2021/29**

(21) Application number: **19860342.5**

(22) Date of filing: **09.08.2019**

(51) Int Cl.:
*G06T 19/00* (2011.01)          *G09G 5/00* (2006.01)
*G09G 5/38* (2006.01)          *H04N 5/74* (2006.01)

(86) International application number:
**PCT/JP2019/031786**

(87) International publication number:
**WO 2020/054298 (19.03.2020 Gazette 2020/12)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
**KH MA MD TN**

(30) Priority: **11.09.2018 JP 2018170040**

(71) Applicant: **Sony Corporation**
**Tokyo 108-0075 (JP)**

(72) Inventors:
• **IKEDA, Takuya**
**Tokyo 108-0075 (JP)**

• **IDA, Kentaro**
**Tokyo 108-0075 (JP)**
• **IIDA, Fumihiko**
**Tokyo 108-0075 (JP)**
• **NISHIBE, Mitsuru**
**Tokyo 108-0075 (JP)**
• **ISHIHARA, Atsushi**
**Tokyo 108-0075 (JP)**

(74) Representative: **2SPL Patentanwälte PartG mbB**
**Postfach 15 17 23**
**80050 München (DE)**

(54) **INFORMATION PROCESSING DEVICE, DRAWING CONTROL METHOD, AND RECORDING MEDIUM HAVING SAID PROGRAM RECORDED THEREON**

(57)     Deterioration in usability due to a delay is improved. An information processing device includes a control unit (10) that controls drawing of a picture displayed on a real object according to delay information based on a result of displaying of a picture on the real object.

FIG.6

EP 3 852 070 A1

## Description

Field

The present disclosure relates to an information processing device, a drawing control method, and a recording medium on which a program thereof is recorded. Background

Recently, a touch panel on which an input can be performed with a finger or a pen, and an interactive projector on which an input can be performed with a pen-type device have been productized. Also, productization and research of a glasses-type augmented reality (AR) device that can superimpose a virtual object on a real world are being actively conducted.

Citation List

Patent Literature

Patent Literature 1: Japanese Laid-open Patent Publication No. 2016-151612 A

Summary

Technical Problem

In such a device that superimposes a picture on a real object, processing time from detection of an object or an input by a user until superimposition of the picture appears as a delay. When the delay is too large, a deviation of a superimposition position becomes noticeable. As a result, an experience value is impaired and usability is deteriorated.

Thus, the present disclosure proposes an information processing device and a drawing control method that can improve deterioration in usability due to a delay, and a recording medium on which a program thereof is recorded.

Solution to Problem

To solve the above-described problem, an information processing device according to one aspect of the present disclosure comprises a control unit that controls drawing of a picture displayed on a real object according to delay information based on a result of displaying of a picture on the real object.

(Action) According to an information processing device of one form according to the present disclosure, drawing of a picture projected in a next frame is controlled on the basis of delay information indicating an amount of a delay actually generated in one frame. Accordingly, even in a case where the delay information changes due to a change in a system configuration or a change in processing time of an application, it becomes possible to dynamically change a prediction amount and compensate for the delay information. As a result, since a positional deviation between a picture projected in a next frame and a real object is decreased, it is possible to improve deterioration in usability due to a delay. Advantageous Effects of Invention

According to the present disclosure, it becomes possible to improve deterioration in usability due to a delay. Note that an effect described here is not necessarily limited, and may be any effects described in the present disclosure.

Brief Description of Drawings

FIG. 1 is a timing chart illustrating a flow of a series of processing to superimpose a picture on a real object.
FIG. 2 is a view illustrating an example of a case where delay time changes due to an increase in time required for imaging.
FIG. 3 is a view illustrating an example of a case where delay time changes due to an increase in time required for recognition.
FIG. 4 is a view illustrating an example of a case where delay time changes due to an increase in time required for drawing.
FIG. 5 is a schematic diagram illustrating a schematic configuration example of a projection system according to a first embodiment.
FIG. 6 is a functional block diagram illustrating the schematic configuration example of the projection system according to the first embodiment.
FIG. 7 is a flowchart illustrating a schematic example of a projection operation executed by the projection system according to the first embodiment.

FIG. 8 is a flowchart illustrating a schematic example of a total delay time measurement operation executed by the projection system according to the first embodiment.

FIG. 9 is a view illustrating an example of a processing flow of when "detection" of a position of an object is performed, the flow being according to the first embodiment.

FIG. 10 is a view illustrating an example of a processing flow of when a prediction point is calculated, the flow being according to the first embodiment.

FIG. 11 is a view illustrating a flow of measuring total delay time, the flow being according to the first embodiment.

FIG. 12 is a view for describing an example of timing, at which the total delay time is reflected, according to the first embodiment.

FIG. 13 is a view for describing another example of timing, at which total delay time is reflected, according to the first embodiment.

FIG. 14 is a view illustrating a schematic configuration example of a projection system according to a second embodiment.

FIG. 15 is a functional block diagram illustrating the schematic configuration example of the projection system according to the second embodiment.

FIG. 16 is a flowchart illustrating a schematic example of a total delay time measurement operation according to the second embodiment.

FIG. 17 is a view for describing a flow of measuring total delay time, the flow being according to the second embodiment.

FIG. 18 is a sequence diagram illustrating an operation example of a modification example of an output device according to the first or second embodiment.

FIG. 19 is a schematic diagram illustrating an example of a case where the projection system according to the first embodiment is applied to AR glasses.

FIG. 20 is a schematic diagram illustrating an example of a case where the projection system according to the second embodiment is applied to a head-mounted display-type VR device.

FIG. 21 is a schematic diagram illustrating an example of a case where the first or second embodiment is applied to a configuration in which a picture is displayed on an object placed on a display.

FIG. 22 is a schematic diagram illustrating an example of a case where the first or second embodiment is applied to an interactive projector.

FIG. 23 is a block diagram illustrating an example of a hardware configuration of an information processing device according to the first or second embodiment.

Description of Embodiments

Hereinafter, an embodiment of the present disclosure will be described in detail on the basis of the drawings. Note that in the following embodiment, overlapped description is omitted by assignment of the same reference sign to identical parts.

Also, the present disclosure will be described in the following order of items.

1. Introduction
2. First embodiment

  2.1 Schematic configuration example of projection system
  2.2 Operation example of projection system

    2.2.1 Projection operation
    2.2.2 Total delay time measurement operation

      2.2.2.1 Object position detection processing
      2.2.2.2 Prediction point calculation processing
      2.2.2.3 Measurement of total delay time
      2.2.2.4 Calculation of prediction amount

  2.3 Reflection timing of prediction amount setting value
  2.4 Action/effect

3. Second embodiment

3.1 Schematic configuration example of projection system
3.2 Operation example of projection system
3.2.1 Total delay time measurement operation
3.2.1.1 Measurement of total delay time
3.3 Action/effect

4. Modification example

4.1 Modification example related to prediction amount calculation
4.2 Modification example related to object position detection
4.3 Modification example related to output device

5. Application example

5.1 AR glasses
5.2 Virtual reality (VR) device/video see-through device
5.3 Display
5.4 Interactive projector
5.5 Other application examples

6. Hardware configuration

1. Introduction

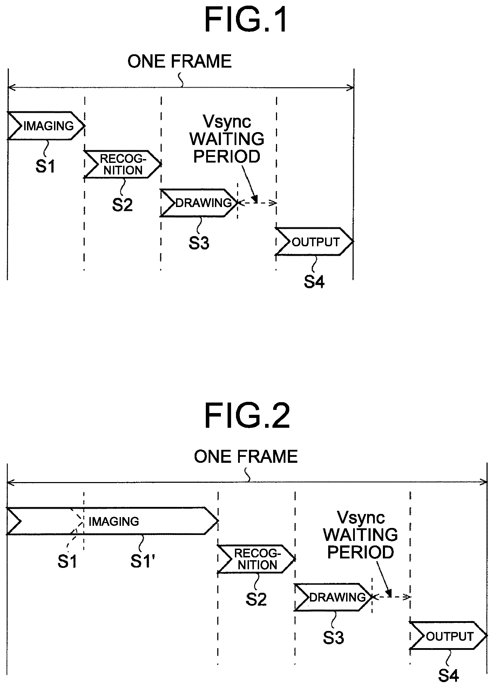

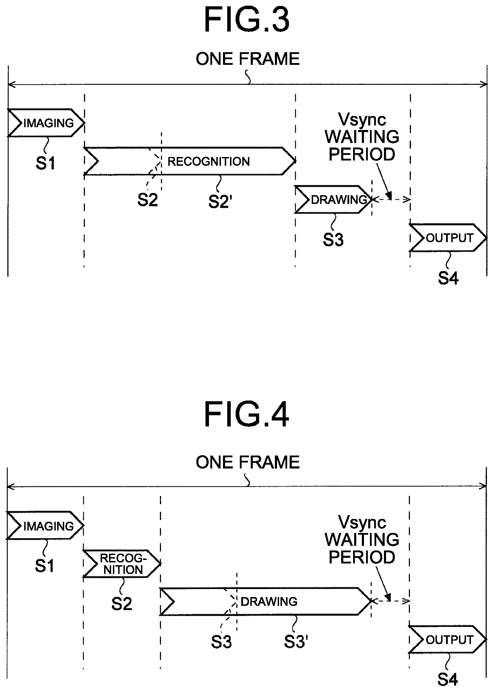

FIG. 1 is a timing chart illustrating a flow of a series of processing to superimpose an image or a moving image (hereinafter, referred to as picture) on a real object. As illustrated in FIG. 1, in the series for superimposing a picture on a real object, a series of processing such as "imaging" S1 of the real object, "recognition" S2 of the real object by an analysis of a captured image, "drawing" S3 of a superimposed picture, and "output" S4 of the drawn picture needs to be performed in one frame. However, variations are generated in delay information indicating an amount of a delay such as delay time generated between the "imaging" S1 and the "output" S4 when an imaging device, a projection device, or a display is changed, or a processing load during execution of an application is changed. FIG. 2 to FIG. 4 are views illustrating examples in which delay time from "imaging" to "output" changes. Note that a case where time required for the imaging S1 is increased (imaging S1') is illustrated in FIG. 2, a case where time required for the recognition S2 is increased (recognition S2') is illustrated in FIG. 3, and a case where time required for the drawing S3 is increased (drawing S3') is illustrated in FIG. 4.

In such a manner, factors that change the delay information are (1) a change in imaging time (see FIG. 2), (2) a change in recognition processing time (see FIG. 3), (3) a change in drawing processing time (see FIG. 4), (4) a change in output time, and the like. Then, the following items can be illustrated as factors that cause each change.

(1) Factor to change imaging time

  - Change of an imaging device
  - Change in a camera frame rate
  - Change in exposure time or shutter speed

(2) Factor to change recognition processing time

  - Increase in a processing cost required for recognition due to an increase in the number of times of detection/tracking of objects (hereinafter, referred to as recognition cost)

(3) Factor to change drawing processing time

  - Increase in a processing cost required for drawing due to an increase in the number of computer graphics (CG) objects to be drawn (hereinafter, referred to as drawing cost)

(4) Factor to change output time

  - Change of a projector to a projector with a different delay due to internal processing (for example, case where a low image-quality or low-resolution projector is changed to a high image-quality or super-resolution projector)
- Change to a projector or display with a different refresh rate (for example, case where a projector with a frame rate being 60 Hertz (Hz) (display interval = 16.7 ms) is changed to a projector with a frame rate being 120 Hz (display interval = 8.3 ms))

As described above, a factor to change the delay information is conceivable in each of the elements that are the "imaging" S1, "recognition" S2, "drawing" S3, and "output" S4. In such a situation, in a case where the "drawing" S3 is executed with the delay information being a fixed numerical value, there is a case where a prediction amount (such as prediction time) for eliminating a deviation of a superimposition position (hereinafter, simply referred to as positional deviation) is insufficient and a picture is displayed behind a position of a real object, or a prediction amount is too large and a picture is displayed ahead of a position of a real object.

Thus, in the following embodiment, a mechanism for measuring a delay generated between the "imaging" S1 and the "output" S4 (hereinafter, referred to as total delay) is introduced into a system, and a prediction amount is dynamically changed from delay information such as total delay time. This makes it possible to improve deterioration in usability due to a delay even in a case where delay information changes.

2. First embodiment

First, the first embodiment will be described in detail with reference to the drawings.

2.1 Schematic configuration example of projection system

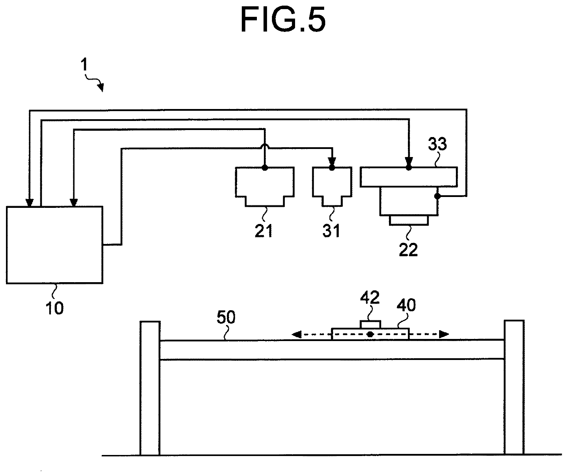

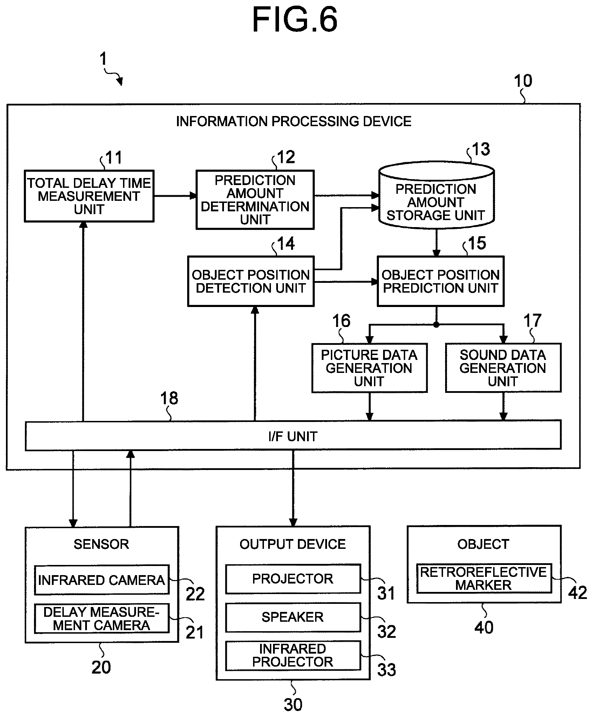

FIG. 5 is a schematic diagram illustrating a schematic configuration example of a projection system according to the present embodiment. FIG. 6 is a functional block diagram illustrating the schematic configuration example of the projection system according to the present embodiment.

As illustrated in FIG. 5 and FIG. 6, a projection system 1 includes an information processing device 10, a sensor 20, and an output device (output unit) 30. In addition, as a part of a configuration to "recognize" a real object on which a picture is projected (hereinafter, referred to as object), the projection system 1 also includes a retroreflective marker 42 provided on an object 40. That is, an infrared projector (light source) 33, the retroreflective marker 42, and an infrared camera (imaging unit) 22 function as detection units to detect a position of the object 40.

The sensor 20 includes the infrared camera 22 to recognize the object 40 and detect a position thereof, and a delay measurement camera 21. In the present embodiment, as the infrared camera 22, a camera in which visible light is cut and only infrared light can be observed is used. However, in a case where the object 40 is recognized from a color or a feature in a captured image, a color camera or grayscale camera may be used.

The delay measurement camera 21 is a camera to measure total delay time as delay information from a positional deviation between the object 40 and a picture, and may be a visible light camera that acquires an image in a visible light region, for example. Also, a frame rate of the delay measurement camera 21 may be, for example, a frame rate equivalent to or higher than a frame rate of the infrared camera 22 or a projector 31 (described later). At that time, when the frame rate of the delay measurement camera 21 is set to a multiple (including 1) of the frame rate of the projector 31, a time difference from timing at which the projector 31 starts or completes an output of a picture until the delay measurement camera 21 starts or completes imaging of the output picture can be made constant. Thus, it becomes possible to improve measurement accuracy of total delay time (described later). Note that in the present description, a case where the total delay time is used as delay information indicating an amount of a delay generated between the "imaging" S1 and the "output" S4 is illustrated. However, delay information is not limited to time information, and various kinds of information that express a delay as processable information such as a numerical value and that are, for example, distance information and a count value can be used.

The output device 30 includes the projector 31 to project a picture, and an infrared projector 33 to project light of a specific wavelength (for example, infrared light in the present embodiment) onto the object 40. Also, the output device 30 may include a speaker 32 or the like to output sound effect or the like.

There is not necessarily one projector 31, and there may be a plurality thereof. In the present embodiment, a general speaker is assumed as the speaker 32, but an ultrasonic speaker having high directivity, or the like may be used. Also, a fixed projection-type projector is assumed in the present embodiment. However, a projector 31 may be configured to be able to project a picture in an arbitrary direction or place by provision of drive or a movement mechanism in an output device 30.

Moreover, in the present embodiment, a display device such as a display may be used instead of the projector 31 or together with the projector 31. In a case where a display is used, a case where an object 40 placed on the display is detected and visual expression or effect is displayed around a position thereof is considered. That is, the "superimposition of a picture" in the present description includes not only projection (also referred to as projection or projection) of a picture onto the object 40 but also displaying of a picture in or around a position corresponding to the object 40.

In the present embodiment, the object 40 is, for example, a real object that can slide on a table 50. Specific examples of the object 40 include a pack in air hockey of a game machine. However, an object 40 is not limited to this, and any real object that can move on a plane or in space can be used. Also, in a case where the projector 31 is movable, a fixed object can be an object 40. That is, various real objects positional relationships of which with a device that projects a picture can be changed can be set as the object 40.

The retroreflective marker 42 for detection of a position of the object 40 is fixed thereto. The retroreflective marker 42 reflects light of a specific wavelength (infrared light in the present example) projected from the infrared projector 33. Note that in the present embodiment, the infrared light projected from the infrared projector 33 and reflected by the retroreflective marker 42 is detected in order to detect a position of the object 40. However, a light emitting unit that emits light of a specific wavelength (such as infrared light emitting diode (LED)) may be mounted on the object 40. Alternatively, in a case where a color camera is used instead of the infrared camera 22, a position of the object 40 can be detected by extraction of a color marker provided on the object 40 with the color camera, or by extraction of a feature of the object 40 which feature is acquired from a captured image.

For example, the information processing device 10 may be an information processing device that includes an information processing unit such as a central processing unit (CPU) as a control unit and that is, for example, a personal computer (PC). However, this is not a limitation, and various electronic devices that can perform information processing and that are, for example, a server (including a cloud server) and the like can be used.

On the basis of information input from the sensor 20, the information processing device 10 generates picture and sound data to be projected on the object 40 and outputs the generated picture data and sound data to the output device 30.

Thus, as illustrated in FIG. 6, the information processing device 10 includes a total delay time measurement unit 11, a prediction amount determination unit 12, a prediction amount storage unit 13, an object position detection unit 14, and an object position prediction unit 15, a picture data generation unit 16, a sound data generation unit 17, and an interface (I/F) unit 18. At least a part of the total delay time measurement unit 11, the prediction amount determination unit 12, the prediction amount storage unit 13, the object position detection unit 14, the object position prediction unit 15, the picture data generation unit 16, and the sound data generation unit 17 may be realized when the CPU (control unit) in the information processing device 10 reads a predetermined program from a recording unit (not illustrated) and performs execution thereof.

The total delay time measurement unit 11 fires a measurement starting event and a measurement ending event from an image acquired from the delay measurement camera 21, and measures the total delay time from the image at that time. Note that the measurement starting event and the measurement ending event will be described later.

When the total delay time measurement unit 11 succeeds in measuring the total delay time, the prediction amount determination unit 12 calculates a prediction amount from the total delay time. Then, the prediction amount determination unit 12 updates a prediction amount setting value stored in the prediction amount storage unit 13 with the calculated prediction amount.

Note that the prediction amount and the prediction amount setting value represent future prediction time (msec), are time information for reducing a positional deviation between the object 40 and a projected image and are values on which the measured total delay time is reflected. For example, in a case where the prediction amount setting value is set to zero regardless of existence/non-existence of a positional deviation, a position of the object 40 in a next frame is predicted in the next frame on the basis of the position of the object 40 which position is detected up to the current frame. Thus, in a case where a picture to be superimposed on the object 40 is "drawn" and "output" with respect to this predicted position in the next frame, a positional deviation corresponding to the total delay time generated between the "imaging" and "output" in one frame is generated between the object 40 and the picture. Note that the one frame indicates a period or a time from the "imaging" to "output". Thus, as the prediction amount setting value, time information to reduce a positional deviation between the object 40 and the projected picture is determined on the basis of the total delay time when a position to draw a picture to be superimposed on the object 40 in "drawing" in a next frame (that is, prediction position of the object 40) is determined. For example, in a case where a picture is projected on a position delayed from the object 40 in the current frame, positive time information corresponding to an amount of the positional deviation is set as the prediction amount setting value at that time in order to project the picture on a position that is further ahead. On the one hand, in a case where a picture is projected on a position advanced from the object 40 in the current frame, negative time information corresponding to an amount of the positional deviation is set as the prediction amount setting value at that time in order to delay the projection position of the picture.

The object position detection unit 14 detects, from an image captured by the infrared camera 22, a position of the retroreflective marker 42 on the object 40 as coordinates. Then, the object position detection unit 14 converts the detected coordinates from a coordinate system of the infrared camera 22 (hereinafter, referred to as camera coordinate system) to a coordinate system of the projector 31 (hereinafter, referred to as projector display coordinate system) by using a projection matrix.

For example, the prediction amount storage unit 13 stores, as a prediction amount setting value, the latest prediction amount calculated by the prediction amount determination unit 12. Also, the prediction amount storage unit 13 stores a history of coordinates of the object 40 which coordinates are detected by the object position detection unit 14 in the past (hereinafter, referred to as detection history).

The object position prediction unit 15 predicts a future position of the object 40 (hereinafter, referred to as prediction point) by using a position (coordinate) of the object 40 which position is detected this time and a history of the position (coordinate) of the object 40 which position is detected in the past (detection history). At that time, the object position prediction unit 15 calculates a prediction point with reference to the latest prediction amount setting value stored in the prediction amount storage unit 13. Note that the prediction point may be, for example, a position on which a picture to be superimposed on the object 40 is "drawn" in and after the next frame.

After the prediction point is calculated, picture data and sound data of the picture to be projected are respectively generated by the picture data generation unit 16 and the sound data generation unit 17. The generated picture data and sound data are transmitted and output to the projector 31 and the speaker 32 via the I/F unit 18.

2.2 Operation example of projection system

Next, an operation of the projection system 1 according to the present embodiment will be described in detail with reference to the drawings.

2.2.1 Projection operation

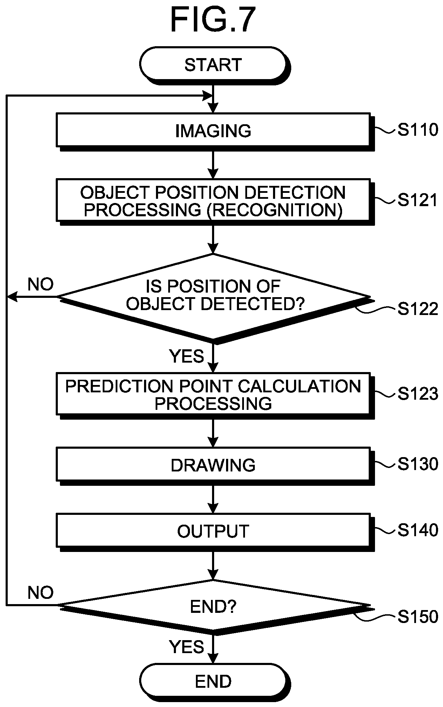

FIG. 7 is a flowchart illustrating a schematic example of a projection operation executed by the projection system according to the present embodiment. As illustrated in FIG. 7, in this operation, first, infrared light is projected by the infrared projector 33 and "imaging" is executed by the infrared camera 22 in order to detect a position of an object 40 (Step S110). An image acquired in this manner is transmitted to the information processing device 10 and input to the object position detection unit 14 via the I/F unit 18.

Next, Step S121 to S123 corresponding to "recognition" of the object 40 are executed. In Step S121, the object position detection unit 14 executes object position detection processing to detect a position of the object 40 included in the image by analyzing the input image. More specifically, the object position detection unit 14 detects a figure of the retroreflective marker 42 in the image.

In a case where the object position detection unit 14 fails to detect the position of the object 40 (NO in Step S122), this operation returns to Step S110. On the one hand, in a case where the object position detection unit 14 succeeds in detecting the position of the object 40 (YES in Step S122), the object position prediction unit 15 then executes prediction point calculation processing to calculate a future prediction point (such as position of the object 40 at next projection timing) by using a result of detection by the object position detection unit 14 at this time, a history of a position (coordinate) of the object 40 which position is detected in the past (detection history), and the latest prediction amount setting value stored in the prediction amount storage unit 13 (Step S123). Note that a result of the object position detection processing executed in the past may be, for example, results of the object position detection processing for the immediately preceding predetermined number of times (for example, three times).

After the future prediction point is calculated in such a manner, the picture data generation unit 16 then performs "drawing" of data of a picture to be projected from the projector 31 onto the object 40 (picture data) (Step S130). At that time, when necessary, the sound data generation unit 17 may generate data of sound to be output from the speaker 32 (sound data).

Next, the picture data generated by the picture data generation unit 16 is transmitted to the projector 31 and the projector 31 reproduces and "outputs" the picture data, whereby a picture is projected onto the object 40 (Step S140) .

Subsequently, it is determined whether to end this operation (Step S150), and this operation is ended in a case of being determined to be ended (YES in Step S150). On the one hand, in a case of being determined not to be ended (NO in Step S150), this operation returns to Step S110.

2.2.2 Total delay time measurement operation

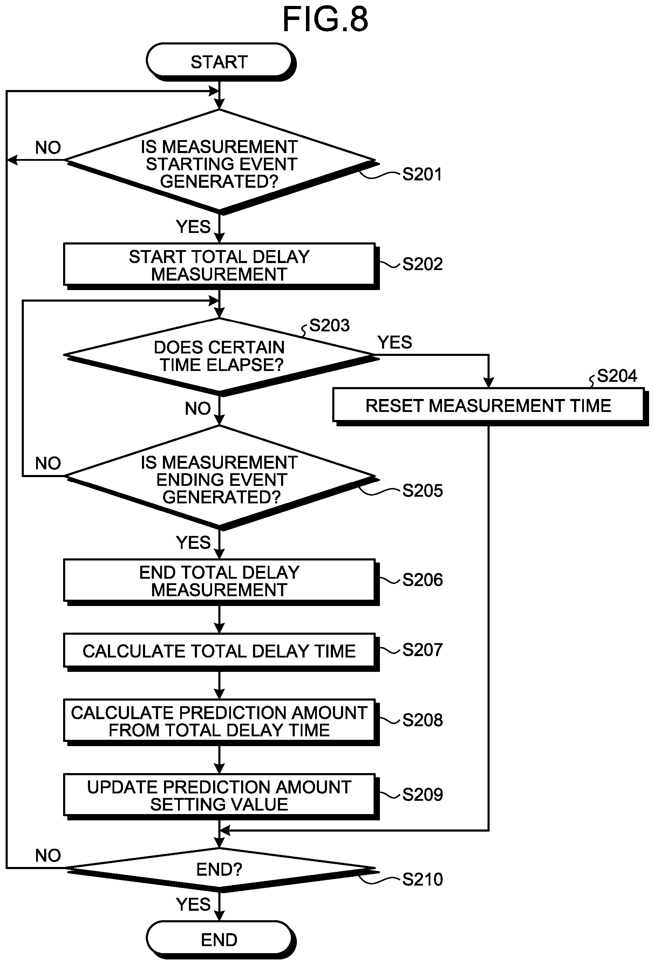

Next, the total delay time measurement operation according to the present embodiment will be described in detail with reference to the drawings. FIG. 8 is a flowchart illustrating a schematic example of the total delay time measurement operation executed by the projection system according to the present embodiment. As illustrated in FIG. 8, in this operation, the total delay time measurement unit 11 first waits until an event for starting measurement of the total delay time (hereinafter, referred to as measurement starting event) fires (NO in Step S201), and starts the measurement of the total delay time (Step S202) in a case where the measurement starting event fires (YES in Step S201). At that time, for example, by using a measurement unit or the like (not illustrated) that includes software or hardware and that is, for example, a counter to count clocks, the total delay time measurement unit 11 measures elapsed time from the start of the measurement of the total delay time. Note that the measurement starting event may be, for example, a case where a projection position of a picture projected from the projector 31, which position is detected by an analysis of an image acquired by the delay measurement camera 21, changes from a projection position detected by a previous image analysis, the measurement of the total delay time not being started being a condition.

Next, the total delay time measurement unit 11 determines whether certain time (such as 50 milliseconds (ms)) or more elapses from the start of the measurement of the total delay time (Step S203), and determines that the measurement of the total delay time is failed, resets the measurement time measured by the measurement unit (not illustrated) (Step S204), and proceeds to Step S209 in a case where the certain time or more elapses (YES in Step S203) .

On the one hand, in a case where the certain time does not elapse yet (NO in Step S203), the total delay time measurement unit 11 determines whether an event for ending the measurement of the total delay time (hereinafter, referred to as measurement ending event) fires (Step S205). In a case where the measurement ending event does fire (NO in Step S205), the total delay time measurement unit 11 returns to Step S203 and executes operations in and after that. Note that the measurement ending event may be, for example, a case where a projection position of a picture projected from the projector 31, which position is detected by an analysis of an image acquired by the delay measurement camera 21, changes from a projection position detected by a previous image analysis, the measurement of the total delay time being started being a condition.

In a case where the measurement ending event fires (YES in Step S205), the total delay time measurement unit 11 ends the measurement of the total delay time (Step S206). Subsequently, the total delay time measurement unit 11 calculates the total delay time from an image of when it is determined that the measurement starting event fires and an image of when it is determined that the measurement ending event fires (Step S207). Note that the measurement of the total delay time in Step S202 to S207 will be described later in detail.

When the total delay time is measured in such a manner, the prediction amount determination unit 12 then calculates a prediction amount from the measured total delay time (Step S208). Subsequently, the prediction amount determination unit 12 updates the prediction amount setting value in the prediction amount storage unit 13 with the calculated prediction amount (Step S209). As a result, the prediction amount setting value in the prediction amount storage unit 13 is updated to the latest value.

Subsequently, it is determined in Step S210 whether to end this operation, and this operation is ended in a case of being determined to be ended (YES in Step S210). On the one hand, in a case of being determined not to be ended (NO in Step S210), this operation returns to Step S201 and operations in and after that are executed.

2.2.2.1 Object position detection processing

Here, the object position detection processing illustrated in Step S121 in FIG. 7 will be described. Detection of a position of the object 40, for example, includes "detection" to identify a position of the object 40 by "recognizing" an image in a current frame, and "tracking" to identify a position of the object 40 by "recognizing" an image in a current frame on the basis of a position of the object 40 which position is identified in the previous frame.

More specifically, in the "detection", for example, a position of a bright spot corresponding to a figure of the retroreflective marker 42 that is in an image photographed by the infrared camera 22 is identified, and coordinates thereof are set as coordinates of the object 40.

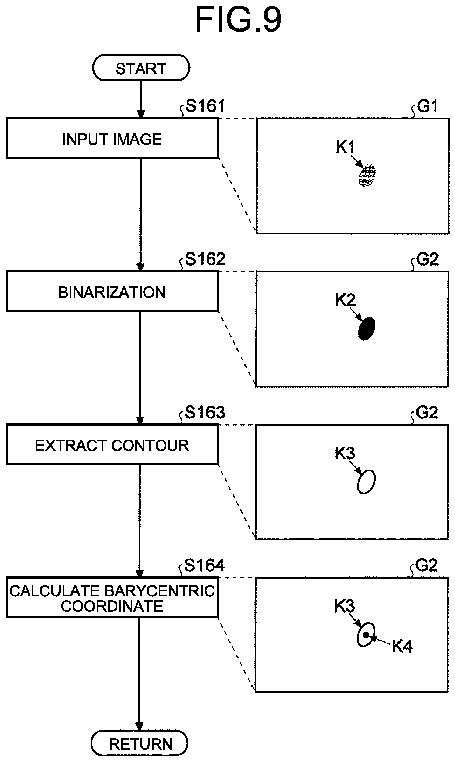

FIG. 9 is a view illustrating an example of a processing flow of when "detection" of a position of the object 40 is performed. As illustrated in FIG. 9, in the "detection" of the position of the object 40, first, an image G1 acquired by cutting of visible light and observing of a figure of infrared light is input from the infrared camera 22 (Step S161). In this image G1, for example, a bright spot K1 corresponding to a figure of the retroreflective marker 42 is expressed on a substantially gray scale. The object position detection unit 14 performs binarization processing on the input image G1 by using a previously-set threshold (Step S162). As a result, for example, a binary image G2 in which each pixel in a region K2 corresponding to the retroreflective marker 42 has a bit value '1' and pixels in the other regions have a bit value '0' is acquired. Subsequently, the object position detection unit 14 extracts a contour K3 of the region K2 from the binary image G2 (Step S163), and then calculates barycentric coordinates K4 of the region corresponding to the retroreflective marker 42 from the extracted contour K3 and sets the calculated barycentric coordinates K4 as the position of the object 40 (Step S164).

Note that a case where the grayscale image G1 is used is illustrated in the above, but this is not a limitation. As described above, for example, in a case where a color camera is used instead of the infrared camera 22, various modifications may be made. For example, a color marker provided on an object 40 is detected with a color camera, or a position of an object 40 is detected by capturing of a feature thereof from an edge or a feature amount in an image captured by a color camera.

On the one hand, in the "tracking", when the contour K3 is extracted in Step S163 in FIG. 9, a vicinity region of barycentric coordinates K4 in a binary image G2 in a current frame is searched for on the basis of the barycentric coordinates K4 of the object 40 which coordinates are detected in the image in the previous frame, whereby a bright spot K1 corresponding to the figure of the retroreflective marker 42 is detected. Alternatively, a motion vector is calculated from a history of the barycentric coordinates K4 for a several times and a binary image G2 in the current frame is searched for in a vector direction thereof, whereby a bright spot K1 corresponding to the figure of the retroreflective marker 42 is detected. Then, similarly to FIG. 9, a contour K3 of a region K2 corresponding to the retroreflective marker 42 is extracted from the detected bright spot K1 (Step S163), K4 calculation of barycentric coordinates of the region K2 corresponding to the retroreflective marker 42 is then performed from the extracted contour K3, and the calculated barycentric coordinates K4 are set as a position of the object 40 (Step S164).

2.2.2.2 Prediction point calculation processing

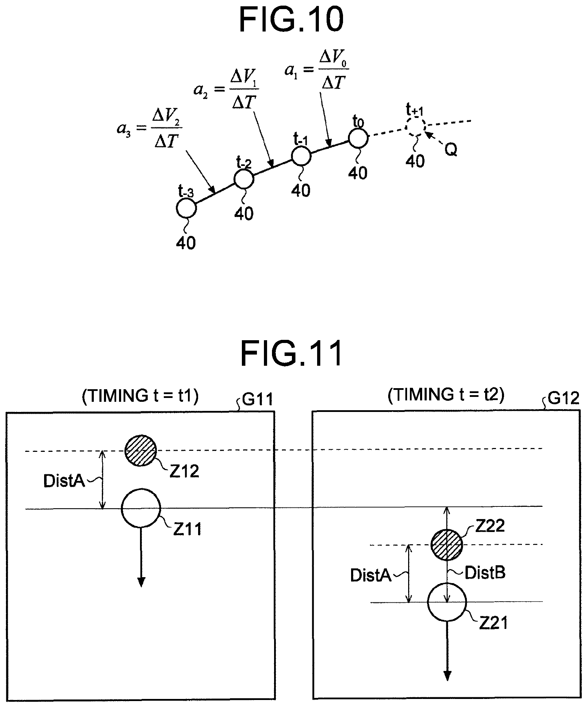

Next, the prediction point calculation processing illustrated in Step S123 in FIG. 9 will be described. As described above, in the prediction point calculation processing, a prediction point is calculated from a position (coordinate) of the object 40 which position is detected this time, a history of a position (coordinate) of the object 40 which position is detected in the past (detection history), and the latest prediction amount setting value stored in the prediction amount storage unit 13. An example of a processing flow of when a prediction point is calculated is illustrated in FIG. 10. Note that a case of calculating, as a prediction point, a position of the object 40 that is n (n is natural number) frames ahead (position Q at timing $t_{+1}$ in FIG. 10) by reflecting a change in acceleration a (acceleration $a_1$ to $a_3$ in FIG. 10) on the prediction point from a history of coordinates of the object 40 which coordinates are detected by the object position detection unit 14 (detection history) is illustrated in FIG. 10. In this case, n prediction points can be acquired. Note that in FIG. 10, $\Delta T$ indicates time for one frame, and $\Delta V_0$ to $\Delta V_2$ indicate a moving speed (vector or scalar) of the object 40 in each frame.

As described above, a prediction amount setting value p represent future prediction time (msec). Thus, in the calculation of a prediction point, it is necessary to determine the number of points to be predicted. Here, when it is assumed that an imaging frame rate of the infrared camera 22 is F (frame per second (fps)), prediction time p' (msec) of when prediction is performed n' points ahead is calculated by the following equation (1).

$$p' = \frac{1000}{F} \times n' \qquad (1)$$

Thus, in the present embodiment, n' is incremented by 1 from 1 and a value of when p' exceeds the prediction amount setting value p for the first time is set as a prediction point Qn of a frame that is n frames ahead.

2.2.2.3 Measurement of total delay time

Next, measurement of the total delay time in Step S202 to S207 in FIG. 8 will be described. As described above, the delay measurement camera 21 images the object 40 and a picture projected from the projector 31 as one image. In the present embodiment, a figure of the object 40 included in the image acquired by this imaging and a figure of the projected picture are detected, and the total delay time is calculated from a positional deviation therebetween. A flow of measuring the total delay time is illustrated in FIG. 11.

As illustrated in FIG. 11, in the measurement of the total delay time, first, it is determined whether a projection position of a picture projected from the projector 31 changes from a projection position detected by a previous image analysis by analysis of an image G11 acquired by the delay measurement camera 21, and timing at which this image G11 is acquired (this is set as timing t = t1) is set as firing timing of a measurement starting event in a case where there is a change. A change in a display position of a projected picture is set as firing timing of a measurement starting event in such a manner because of the following reason. That is, when a case where a refresh rate of the projector 31 is 60 Hz is an example, a projection position of a picture is updated about every 16.7 msec, whereby the object 40 moves between a start of projection by the projector 31 and imaging by the delay measurement camera 21 and accurate total delay time cannot be measured when timing at which projection is continued, that is, timing different from the timing at which the projection position is changed is set as the firing timing.

Subsequently, a distance distA between a position of a figure Z11 of the object 40 and a position of a figure Z12 of the displayed picture is identified from an analysis result of the image G11. A unit of this distance distA may be, for example, a pixel.

Next, it is determined whether a projection position of the picture projected from the projector 31 changes from the projection position detected by the previous image analysis by an analysis of an image G12 acquired by the delay measurement camera 21, and timing at which this image G12 is acquired (this is set as timing t = t2) is set as firing timing of a measurement ending event in a case where there is a change.

Then, from a position of a figure Z21 of the object 40 in the image G12 and the position of the figure Z11 of the object 40 in the image G11, a distance distB in which the object 40 moves from the timing t1 to the timing t2 is identified. Note that a figure Z22 in FIG. 11 is a position of a figure of the displayed picture in the image G12 acquired by the delay measurement camera 21 at the timing t2.

Here, the distance distA indicates a distance corresponding to the total delay time, and the distance distB indicates a distance that the object 40 moves while the picture projected by the projector 31 is updated once, that is, in one frame. Thus, the total delay time D can be calculated from the distance distA and the distance distB by the following equation (2). Note that R indicates a refresh rate (Hz) of the projector in equation (2).

$$D = \frac{distA}{distB} \times \frac{1000}{R} \qquad\qquad (2)$$

Note that a case where a projection position of the picture by the projector 31 is delayed from a position of the object 40 is illustrated in FIG. 11. However, in a case where a picture is projected ahead of an object 40 in a traveling direction of the object 40, a case where a prediction amount setting value is too large is meant. In this case, the total delay time D calculated by the equation (2) is inverted into a negative value.

In the projection system 1 according to the present embodiment, the delay measurement camera 21 can measure the total delay time each time a display by the projector 31 is updated. However, there are many cases where jitter is generated in an imaging interval of the delay measurement camera 21 and a display update interval of the projector 31. Thus, with respect to the total delay time D, an average of coordinates of the object 40 may be calculated from a detection history acquired by the object position detection processing executed in the past, or coordinates of the object 40 which coordinates are acquired by object position detection processing this time may be excluded in a case of being a value significantly deviated from the detection history or the average thereof.

2.2.2.4 Calculation of prediction amount

Next, calculation of a prediction amount in Step S208 in FIG. 8 will be described. The prediction amount can be calculated by utilization of the total delay time D calculated in the above manner. More specifically, when a prediction amount setting value before an update is $p_{curr}$ and the latest prediction amount setting value after the update is $p_{new}$, the latest prediction amount setting value $p_{new}$ can be calculated by the following equation (3).

$$p_{new} = D + p_{curr} \qquad\qquad (3)$$

By calculating a prediction point Q by using the latest prediction amount setting value $p_{new}$ updated in such a manner, it is possible to compensate for a delay by using the correct prediction amount setting value $p_{new}$ even in a case where the total delay time D changes. However, even in such a case, in a case where the prediction amount setting value $p_{new}$ is too large, there is a possibility that misprediction such as overshoot appears noticeably. Thus, in such a case, an upper limit may be provided for the prediction amount setting value $p_{new}$, and the prediction amount setting value $p_{new}$ may be discarded in a case where the prediction amount setting value $p_{new}$ exceeds the upper limit.

2.3 Reflection timing of prediction amount setting value

The prediction amount setting value $p_{new}$ calculated in the above manner is timing of executing "recognition" in a next frame of a frame in which this prediction amount setting value $p_{new}$ is calculated (for example, timing of executing Step S123 in FIG. 9).

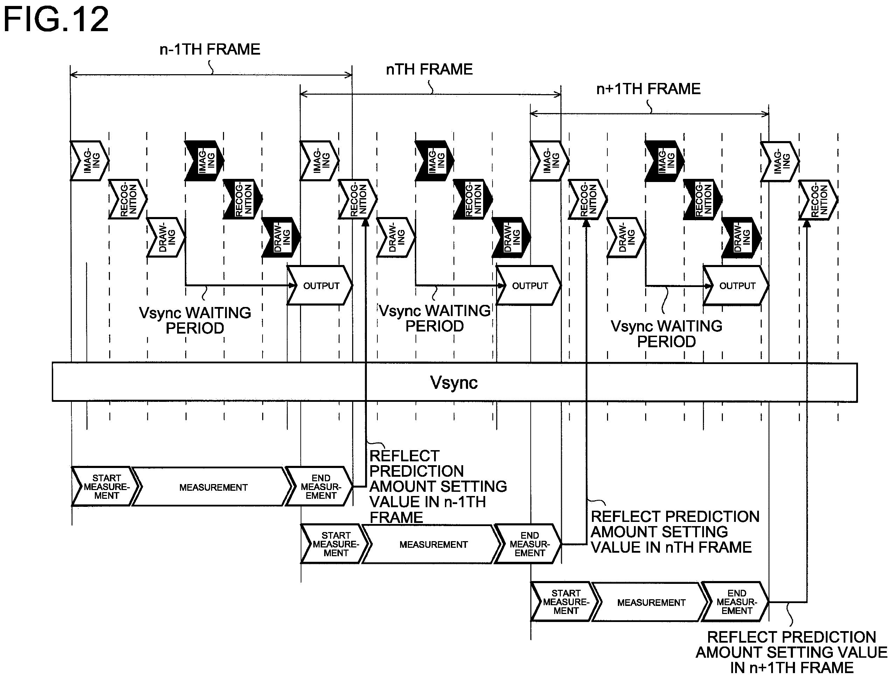

FIG. 12 is a view for describing an example of timing, at which the total delay time is reflected, according to the present embodiment. Note that a case where a frame rate of picture drawing in the information processing device 10 is about twice the frame rate of picture output in the projector 31 and the information processing device 10 executes "imaging" to "drawing" one more time until the projector 31 completes "output" from a state of waiting for a vertical synchronization signal Vsync is illustrated in FIG. 12. Also, a sequence with the vertical synchronization signal Vsync turned off is illustrated in FIG. 12. Thus, in FIG. 12, "imaging", "recognition", and "drawing" are repeatedly executed regardless of timing of the vertical synchronization signal Vsync, and a picture already drawn at that time is "output" at the timing of the vertical synchronization signal Vsync.

In such a case, as illustrated in FIG. 12, a prediction amount setting value $p_{new}$ calculated in an n-1th frame is reflected at timing of executing "recognition" in the next nth frame. Similarly, the prediction amount setting value $p_{new}$ calculated in the nth frame is reflected at timing of executing "recognition" in the next n+1th frame.

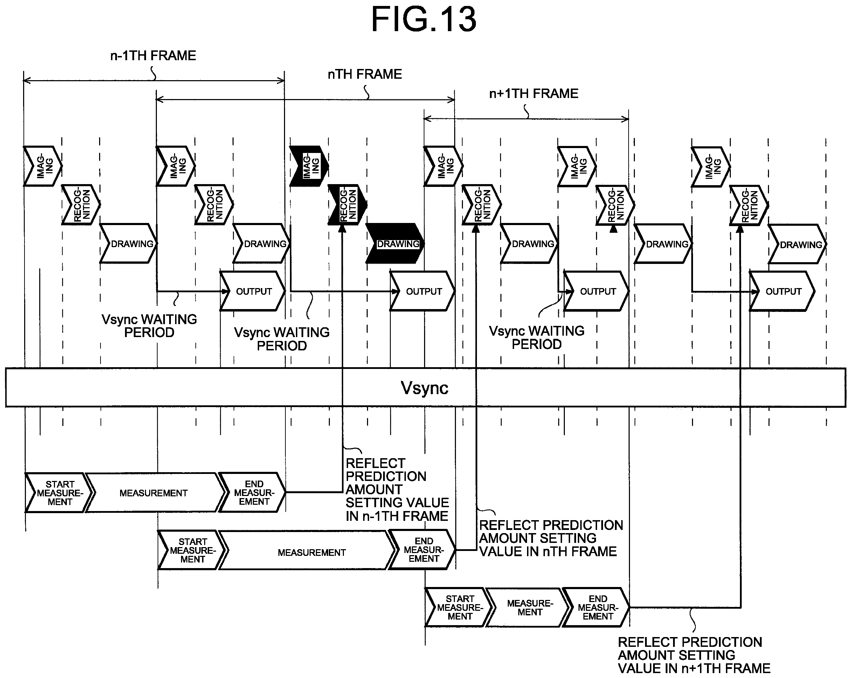

Also, FIG. 13 is a view for describing another example of timing, at which the total delay time is reflected, according to the present embodiment. Note that in FIG. 13, for example, a case where "drawing" requires long processing time in a sequence similar to that in FIG. 12 is illustrated.

In such a case, as illustrated in FIG. 13, time required from "imaging" to "output" varies from frame to frame. This is because there is an effect of a vertical synchronization signal Vsync waiting period. In such a case, as described above, by calculating and using an average of the total delay time, it is possible to reduce a positional deviation between a projected picture from the projector 31 and the object 40.

2.4 Action/effect

As described above, according to the present embodiment, delay information such as total delay time from "imaging" to "output" is measured, a prediction amount setting value to improve a positional deviation between an object 40 and a projected picture is updated on the basis of the measured delay information, and a position (prediction point) of the object 40 at next projection timing is predicted by utilization of the updated prediction amount setting value when a picture to be projected in a next frame is "drawn". Accordingly, even in a case where the delay information changes due to a change in a system configuration or a change in processing time of an application, it becomes possible to dynamically change a prediction amount and compensate for the delay information. As a result, since a positional deviation between a picture projected in the next frame and the object 40 is reduced, it is possible to improve deterioration in usability due to a delay.

3. Second embodiment

Next, the second embodiment will be described in detail with reference to the drawings. In the second embodiment, an object 40 itself includes a part of a configuration to measure delay information. Note that in the present embodiment, a case where total delay time is used as the delay information will be also illustrated.

3.1 Schematic configuration example of projection system

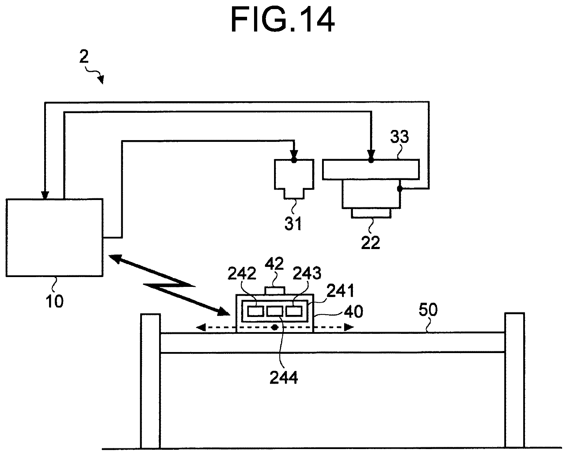

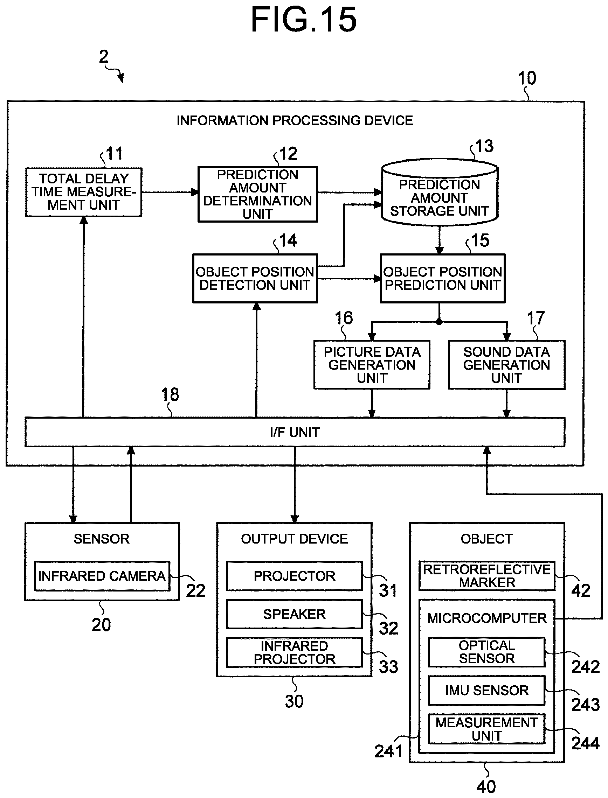

FIG. 14 is a view illustrating a schematic configuration example of a projection system according to the present embodiment. FIG. 15 is a functional block diagram illustrating the schematic configuration example of the projection system according to the present embodiment.

As illustrated in FIG. 14 and FIG. 15, a projection system 2 includes a configuration which is similar to that of the projection system 1 described with reference to FIG. 5 and FIG. 6 in the first embodiment, and in which a delay measurement camera 21 in a sensor 20 is omitted and a microcomputer (hereinafter, referred to as a microcomputer) 241 is added to an object 40. An optical sensor (second sensor) 242, an inertial measurement unit (IMU) sensor (first sensor) 243, and a measurement unit 244 are built in the microcomputer 241. For example, the measurement unit 244 may be a counter or the like to measure elapsed time by counting a signal that has a constant cycle and that is, for example, a clock signal. Also, the microcomputer 241 includes a communication unit (not illustrated) and is configured to be able to communicate with an information processing device 10 in a wireless or wired manner. As a network connecting the information processing device 10 and the microcomputer 241, for example, various networks such as wireless or wired local area network (LAN), Bluetooth (registered trademark), and analog or digital wireless communication (including optical communication and the like) can be used.

In addition to communication with the information processing device 10, the microcomputer 241 controls the optical sensor 242, the IMU sensor 243, and the measurement unit 244. The optical sensor 242 detects that a picture is projected from a projector 31, for example. The IMU sensor 243 detects, for example, a start or stop of movement of the object 40. The measurement unit 244 measures, for example, a time difference between timing of the start or stop of the movement of the object 40 which start or stop is detected by the IMU sensor 243, and timing of projection of a picture from the projector 31 which projection is detected by the optical sensor 242. Note that the measurement unit 244 may be a measurement unit built as hardware in the microcomputer 241, or may be a measurement unit that is software incorporated by execution of a program by the microcomputer 241.

The microcomputer 241 transmits the time difference measured by the measurement unit 244 to the information processing device 10 as total delay time. At that time, the microcomputer 241 may add, as a time stamp, current time measured by a measurement unit (not illustrated) such as a counter to information of the total delay time transmitted to the information processing device 10.

3.2 Operation example of projection system

Next, an operation of the projection system 1 according to the present embodiment will be described in detail with reference to the drawings. Since a projection operation executed by a projection system 2 according to the present embodiment may be similar to the projection operation described with reference to FIG. 7 in the first embodiment, a detailed description thereof is omitted here.

3.2.1 Total delay time measurement operation

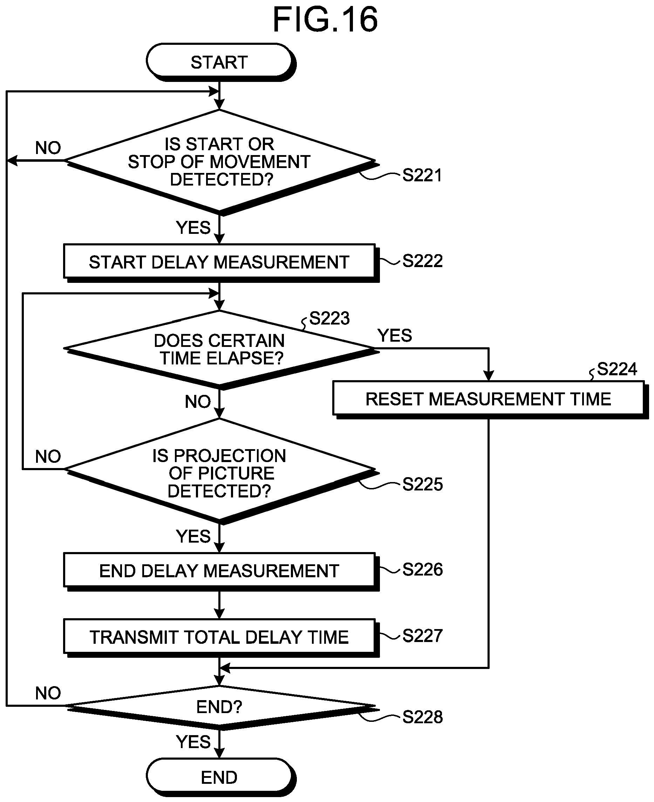

FIG. 16 is a flowchart illustrating a schematic example of a total delay time measurement operation according to the present embodiment. As illustrated in FIG. 16, in this operation, the microcomputer 241 first waits until the IMU sensor 243 detects a start or stop of movement of the object 40 (NO in Step S221). That is, in the present embodiment, the start or stop of the movement of the object 40 corresponds to the measurement starting event in the first embodiment.

When the start or stop of the movement of the object 40 is detected by the IMU sensor 243 (YES in Step S221), the microcomputer 241 starts measuring elapsed time from the timing at which the start or stop of the movement of the object 40 is detected by the IMU sensor 243 (corresponding to total delay time) (hereinafter, referred to as total delay time) (Step S222). For example, the measurement unit 244 is used for the measurement of the total delay time.

Next, the microcomputer 241 determines whether certain time (such as 50 ms) or more elapses from the start of the measurement of the total delay time (Step S223), and determines that the measurement of the total delay time is failed, resets the measurement time measured by the measurement unit (not illustrated) (Step S224), and proceeds to Step S228 in a case where the certain time or more elapses (YES in Step S223).

On the one hand, in a case where the certain time does not elapse yet (NO in Step S223), the microcomputer 241 determines whether projection of a picture from the projector 31 is detected by the optical sensor 242 (Step S225). That is, in the present embodiment, projection of a picture from the projector 31 corresponds to the measurement ending event in the first embodiment.

In a case where the projection of a picture from the projector 31 is not detected by the optical sensor 242 (NO in Step S225), the microcomputer 241 returns to Step S223 and executes operations in and after that.

On the one hand, in a case where the projection of a picture from the projector 31 is detected by the optical sensor 242 (YES in Step S225), the microcomputer 241 ends the measurement of the total delay time by the measurement unit 244 (Step S226). Then, the microcomputer 241 transmits information of the total delay time measured by the measurement unit 244 to the information processing device 10 via a predetermined network (Step S227).

Subsequently, the microcomputer 241 determines in Step S228 whether to end this operation, and ends this operation in a case of ending (YES in Step S228). On the one hand, in a case of being determined not to be ended (NO in Step S228), the microcomputer 241 returns to Step S221 and executes operations in and after that.

With respect to the operation of the microcomputer 241 in the above-described manner, the information processing device 10 calculates a prediction amount from the total delay time received from the microcomputer 241, for example, by executing operations similar to those in Step S208 to S209 in FIG. 8 (Step S208) and updates a prediction amount setting value in a prediction amount storage unit 13 with the calculated prediction amount (Step S209). As a result, the prediction amount setting value in the prediction amount storage unit 13 is updated to the latest value.

3.2.1.1 Measurement of total delay time

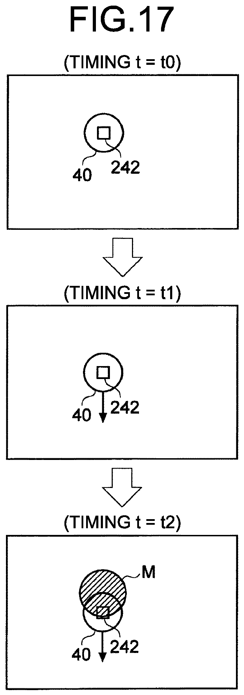

Next, measurement of the total delay time in Step S222 to S226 in FIG. 16 will be described. FIG. 17 is a view for describing a flow of measuring total delay time, the flow being according to the present embodiment. Note that in FIG. 17, a case where a start of movement of an object 40 is set as a measurement starting event is illustrated.

As illustrated in FIG. 17, in a state in which the measurement starting event does not fire, that is, in a state in which the object 40 is stopped (timing t = t0), the projector 31 is in a state of not projecting a picture.

Next, when the IMU sensor 243 detects a start of movement of the object 40 (timing t = t2), it is assumed that the measurement starting event fires, and the measurement unit 244 starts measuring elapsed time.

Subsequently, when projection of a picture M from the projector 31 is detected by the optical sensor 242 (timing t = t3), it is assumed that a measurement ending event fires, and the measurement of the elapsed time by the measurement unit 244 is stopped.

The elapsed time (time difference) measured in such a manner is transmitted as the total delay time from the microcomputer 241 to the information processing device 10. At that time, the measurement unit 244 is reset.

Note that in a case where the measurement ending event does not fire even when certain time elapses after the measurement by the measurement unit 244 is started, the microcomputer 241 determines that the measurement is failed, and resets the measurement unit 244. For example, in a case where the optical sensor 242 of the object 40 is out of a range of the picture projected from the projector 31, the microcomputer 241 cannot fire the measurement ending event. Thus, in such a case, the measurement unit 244 is reset on the assumption that the measurement of the total delay time is failed.

3.3 Action/effect

As described above, according to the present embodiment, it is possible to directly measure the total delay time from "imaging" to "output" by using the measurement unit 244. As a result, a processing load of the total delay time measurement unit 11 in the information processing device 10 can be reduced. Since other configurations, operations, and effects may be similar to those in the above-described embodiment, a detailed description thereof is omitted here.

Note that in the above-described description, the timing at which the object 40 starts moving is set as firing timing of the measurement starting event. However, as described above separately, the timing at which the object 40 stops moving can be set as firing timing of the measurement starting event. In that case, time at which the object 40 stops is set as timing t1 (measurement starting timing) in FIG. 17 by the IMU sensor 243, and the optical sensor 242 detects that a picture is no longer projected from the projector 31 and time thereof is set as timing t2 (measurement ending timing) in FIG. 17, whereby total delay time can be measured by the measurement unit 244.

4. Modification example

Subsequently, some modification examples of the above-described embodiments will be described in the following.

4.1 Modification example related to prediction amount calculation

As described above, in the first and second embodiments, total delay time is measured and a prediction amount setting value is changed. However, in combination with this, a prediction amount can be estimated by another means or an update of a prediction amount can be limited.

For example, in a case where the number of objects 40 increases, a processing load of "recognition" increases. Thus, total delay time is likely to increase. Thus, in a case where the number of objects 40 increases, a prediction amount may be increased in response to a result of "recognition".

Similarly, in a case where a drawing cost of an application becomes high, for example, in a case where the number of objects to be drawn becomes large, a processing load of "drawing" increases. Thus, the total delay time is likely to increase. Thus, in a case where the drawing cost of the application becomes high, a prediction amount may be increased in response to a result of "drawing".

Conversely, in a case where the number of objects 40 is decreased or a drawing cost of the application becomes low, a prediction amount may be decreased in response to results of "recognition" and "drawing".

Also, a correspondence between a drawing cost, recognition cost, and total delay time may be learned in advance by machine learning or the like, and the total delay time may be predicted from the drawing cost and recognition cost on the basis of the learning model and a prediction amount may be updated according to a result thereof.

Moreover, in a case where the projector 31 operates on a battery, a prediction amount may be changed according to a battery consumption mode. For example, in a case where a frame rate of the projector 31 is reduced in a low consumption mode, a prediction amount may be increased according to a reduced amount of the frame rate.

Furthermore, in a case where an amount of a change in magnitude of total delay time is large in a short period, an upper limit or lower limit for the prediction amount may be set in such a manner that a prediction amount does not become extremely large or small.

Alternatively, in a case where the total delay time is large, a processing cost of any of the processes from "imaging" to "output" may be reduced, for example, by reduction of a drawing cost of an application. For example, by changing resolution of an infrared camera 22 or the projector 31, reducing mesh information of CG to be drawn, or reducing the number of CG objects to be drawn, it is possible to reduce a processing cost of any of the processes from "imaging" to "output".

4.2 Modification example related to object position detection

In the second embodiment described above, a case where a picture in a visible light region which picture is projected by the projector 31 is detected by the optical sensor 242 and the measurement ending event fires is illustrated. However, this is not a limitation. For example, a configuration in which a light source that emits light, which has a wavelength other than that of visible light and which is infrared light or the like, in synchronization with projection by a projector 31 is used and a measurement ending event fires when the light projected from this light source is detected by an optical sensor 242 is also possible.

Also, instead of the configuration in which a measurement ending event fires when a picture that is in a visible light region and that is projected by the projector 31 is detected by the optical sensor 242, a configuration in which sound is reproduced from a speaker 32 in synchronization with projection from a projector 31 and a measurement ending event fires when this sound is detected by a microphone is possible.

4.3 Modification example related to output device

Also, in the above-described embodiments, a case where one projector 31 is used as an output device 30 to project a picture superimposed on an object 40 is illustrated. However, the number of output devices 30 to project a picture superimposed on an object 40 is not limited to one. For example, a plurality of projectors 31 may be used to project a picture onto one or more objects 40 (multi-projector). In that case, total delay time measured on the basis of an image acquired by a delay measurement camera 21 and a prediction amount setting value stored in a prediction amount storage unit 13 may be shared by a plurality of projectors 31. For example, one projector 31 among the plurality of projectors 31 may be set as a master, and total delay time and a prediction amount setting value that are the same as total delay time and a prediction amount setting value measured by utilization of the master projector 31 may be set with respect to the other projectors 31.

Multi-projectors can be also realized by a combination of a plurality of projection systems 1 according to the first embodiment. In that case, for example, an information processing device 10 and a delay measurement camera 21 may be shared by the plurality of projection systems 1. The information processing device 10 can measure total delay time of each of the plurality of projection systems 1 on the basis of an image acquired by the shared delay measurement camera 21, and can set a prediction amount setting value for each of the projection systems 1 on the basis of this total delay time.

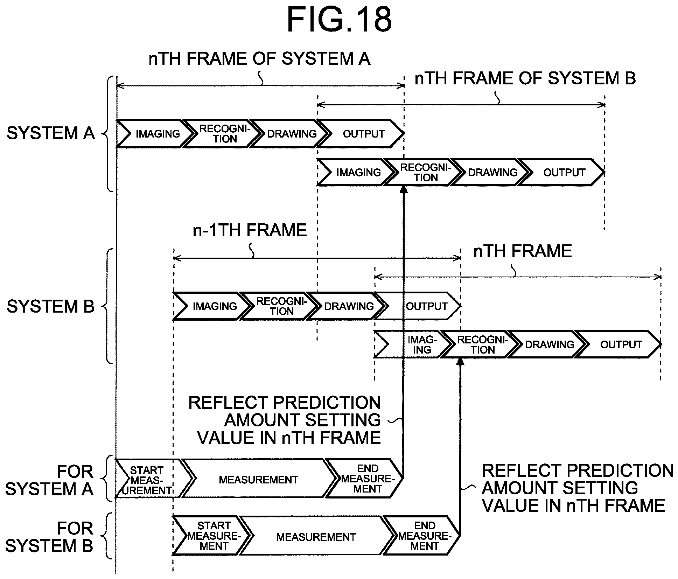

FIG. 18 is a sequence diagram of a case where multi-projectors are realized by two projection systems 1 that are a system A and a system B. As illustrated in FIG. 18, the information processing device 10 measures total delay time for each of the system A and the system B, and reflects the measured total delay time on each of the system A and the system B.

5. Application example

Subsequently, some application examples of the above-described embodiments will be described in the following.

5.1 AR glasses

The above-described embodiments can be applied, for example, to AR glasses that display a picture on a transmissive display corresponding lens portions in a glasses-type device.

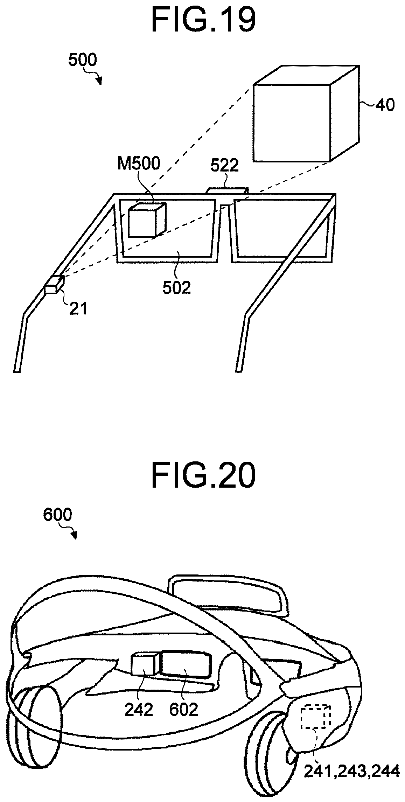

FIG. 19 is a schematic diagram illustrating an example of a case where the projection system according to the first embodiment is applied to AR glasses. As illustrated in FIG. 19, for example, a delay measurement camera 21 is installed in a temple portion and a color camera 522 is installed in a bridge portion in AR glasses 500, for example. A transmissive display 502 corresponds to the projector 31 in the first embodiment. An information processing device 10 may be mounted on the AR glasses 500, or may be provided separately from the AR glasses 500. In a case where the information processing device 10 and the AR glasses 500 are separated from each other, the AR glasses 500 and the information processing device 10 are configured to be able to communicate with each other in a wireless or wired manner. As a network connecting the information processing device 10 and the AR glasses 500, for example, various networks such as wireless or wired LAN, Bluetooth (registered trademark), and analog or digital wireless communication (including optical communication and the like) can be used.

A color camera 522 replaces an infrared projector 33, an infrared camera 22, and a retroreflective marker 42. The information processing device 10 captures a feature of an object 40 which feature is acquired from an image captured by the color camera 522, and detects a position thereof. However, instead of the color camera 522, an infrared projector 33 and an infrared camera 22 may be provided in a bridge portion of AR glasses 500, and a retroreflective marker 42 may be provided on an object 40.

A delay measurement camera 21 images a result of superimposition of a picture M500, which is displayed on the transmissive display 502, on the object 40 through the transmissive display 502. Similarly to the first embodiment, the information processing device 10 measures total delay time from the image captured by the delay measurement camera 21 and dynamically updates a prediction amount setting value. Note that in the present application example, information predicted by the information processing device 10 is a movement or a change in a direction of a face of a user wearing the AR glasses 500.

Note that in the present description, a case where the projection system 1 according to the first embodiment is applied to the AR glasses 500 is illustrated. However, this is not a limitation, and the projection system 2 according to the second embodiment can be also applied to AR glasses 500.

### 5.2 Virtual reality (VR) device/video see-through device

Also, the above-described embodiments can be applied, for example, to a head-mounted display for VR and a video see-through device that superimposes a virtual object on a picture acquired by photographing of an outside world.

FIG. 20 is a schematic diagram illustrating an example of a case where the projection system according to the second embodiment is applied to a head-mounted display-type VR device. As illustrated in FIG. 20, in a VR device 600, for example, an optical sensor 242 is provided in the vicinity of a display 602 corresponding to the projector 31 in the second embodiment, and a microcomputer 241 including an IMU sensor 243 and a measurement unit 244 is provided inside. The information processing device 10 may be mounted on the VR device 600, or may be provided separately from the VR device 600. In a case where the information processing device 10 and the VR device 600 are separated from each other, the VR device 600 and the information processing device 10 are configured to be able to communicate with each other in a wireless or wired manner. As a network connecting the information processing device 10 and the VR device 600, for example, various networks such as wireless or wired LAN, Bluetooth (registered trademark), and analog or digital wireless communication (including optical communication and the like) can be used.

In such a configuration, similarly to the second embodiment, the microcomputer 241 starts measurement of total delay time by the measurement unit 244 when detecting, as a measurement starting event, a start or stop of movement of the VR device 600 (that is, start or stop of movement of a user wearing the VR device 600) by the IMU sensor 243. Then, when a display of a picture on the display 602 is detected by the optical sensor 242, the measurement of the total delay time by the measurement unit 244 is ended with this as a measurement ending event. As a result, it is possible to measure the total delay time from when the user starts moving until a picture is displayed.

Note that in the present description, a case where the projection system 1 according to the first embodiment is applied to the VR device 600 is illustrated. However, this is not a limitation, and a projection system 2 according to the second embodiment can be also applied to a VR device 600.

### 5.3 Display

Also, the above-described embodiments can be applied, for example, to a configuration in which a picture such as an effect or texture is superimposed on an object 40 placed on a display.

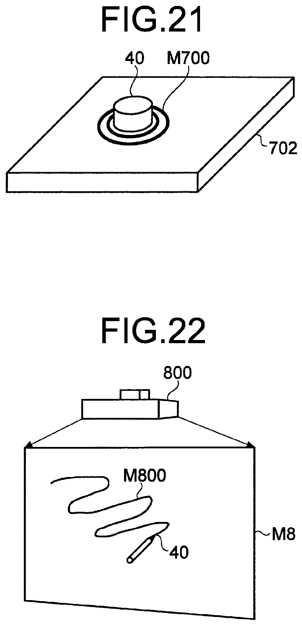

FIG. 21 is a schematic diagram illustrating an example of a case where the above-described embodiments are applied to a configuration in which a picture is displayed on an object placed on a display. As illustrated in FIG. 21, in the present example, a table-type display 702 is used instead of a projector 31 and a table 50, for example. Total delay time corresponding to a positional deviation between an object 40 on the display 702 and a superimposed image M700 displayed on the display 702 may be measured with a delay measurement camera 21 similarly to the first embodiment or may be measured by mounting of a microcomputer 241, which includes an optical sensor 242, an IMU sensor 243, and a measurement unit 244, on an object 40 similarly to the second embodiment, for example.

### 5.4 Interactive projector

Similarly to the above-described display, the above-described embodiments can be also applied to an interactive projector 800 to which an image M800 and the like can be input, with a pen-type device 840 that is an object 40, in a region M8 where a picture is projected and which is, for example, what is illustrated in FIG. 22.

### 5.5 Other application examples

In addition, the above-described embodiments can be also applied to various electronic devices that superimpose a picture on an object 40 a relative position of which with an output device (such as projector 31) that projects or displays the picture changes.

### 6. Hardware configuration

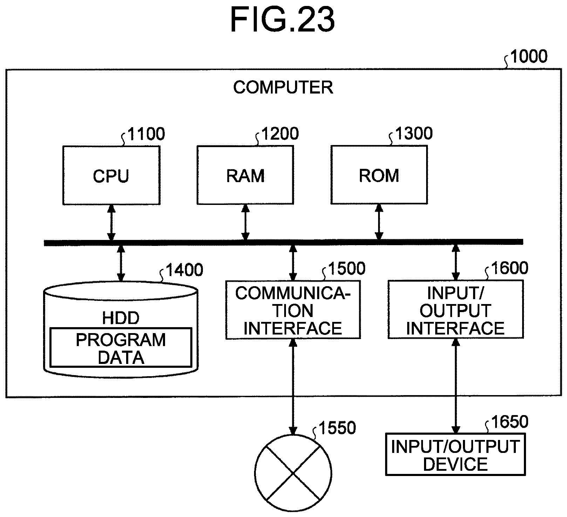

Information processing devices 10 according to the above-described embodiments, modification examples, and application examples can be realized, for example, by a computer 1000 having a configuration in a manner illustrated in FIG. 23. FIG. 23 is a hardware configuration diagram illustrating an example of a computer 1000 that realizes functions of an information processing device 10. The computer 1000 includes a CPU 1100, a RAM 1200, a read only memory (ROM) 1300, a hard disk drive (HDD) 1400, a communication interface 1500, and an input/output interface 1600. Each unit of the computer 1000 is connected by a bus 1050.

The CPU 1100 operates on the basis of programs stored in the ROM 1300 or the HDD 1400, and controls each unit. For example, the CPU 1100 expands the programs, which are stored in the ROM 1300 or the HDD 1400, in the RAM 1200 and executes processing corresponding to various programs.

The ROM 1300 stores a boot program such as a basic input output system (BIOS) executed by the CPU 1100 during activation of the computer 1000, a program that depends on hardware of the computer 1000, and the like.

The HDD 1400 is a computer-readable recording medium that non-temporarily records a program executed by the CPU 1100, data used by the program, and the like. More specifically, the HDD 1400 is a recording medium that records a projection control program according to the present disclosure which program is an example of program data 1450.

The communication interface 1500 is an interface for the computer 1000 to connect to an external network 1550 (such as the Internet). For example, the CPU 1100 receives data from another device or transmits data generated by the CPU 1100 to another device via the communication interface 1500.

The input/output interface 1600 includes the above-described I/F unit 18, and is an interface for connecting an input/output device 1650 and the computer 1000. For example, the CPU 1100 receives data from an input device such as a keyboard or mouse via the input/output interface 1600. Also, the CPU 1100 transmits data to an output device such as a display, a speaker, or a printer via the input/output interface 1600. Also, the input/output interface 1600 may function as a medium interface that reads a program or the like recorded on a predetermined recording medium (medium). The medium is, for example, an optical recording medium such as a digital versatile disc (DVD) or phase change rewritable disk (PD), a magnetooptical recording medium such as a magneto-optical disk (MO), a tape medium, a magnetic recording medium, a semiconductor memory, or the like.

For example, in a case where the computer 1000 functions as an information processing device 10 according to the above-described embodiments, the CPU 1100 of the computer 1000 realizes functions of a total delay time measurement unit 11, a prediction amount determination unit 12, a prediction amount storage unit 13, an object position detection unit 14, an object position prediction unit 15, a picture data generation unit 16, and a sound data generation unit 17 by executing a program loaded on the RAM 1200. Also, the HDD 1400 stores a program and the like related to the present disclosure. Note that the CPU 1100 reads program data 1450 from the HDD 1400 and executes the program data, but may acquire these programs from another device via the external network 1550 in another example.

Although embodiments of the present disclosure have been described above, the technical scope of the present disclosure is not limited to the above-described embodiments as they are, and various modifications can be made within the spirit and scope of the present disclosure. Also, components of different embodiments and modification examples may be arbitrarily combined.

Also, an effect in each of the embodiments described in the present description is merely an example and is not a limitation, and there may be a different effect.

Note that the present technology can also have the following configurations.

(1) An information processing device comprising a control unit that controls drawing of a picture displayed on a real object according to delay information based on a result of displaying of a picture on the real object.

(2) The information processing device according to (1), wherein the control unit measures the delay information on the basis of a captured image in which the real object and the picture are imaged.

(3) The information processing device according to (1) or (2), wherein the control unit measures the delay information on the basis of a first captured image in which the real object and a first picture are imaged, and a second captured image in which the real object and a second picture different from the first picture are imaged.

(4) The information processing device according to (3), wherein the control unit identifies a first distance between a first figure of the real object in the first captured image and a second figure of the first picture in the first captured image, identifies a second distance, for which the real object moves while the picture displayed on the real object is switched from the first picture to the second picture, on the basis of the first figure and a second figure of the real object in the second captured image, and calculates the delay information on the basis of the first distance and the second distance.

(5) The information processing device according to any one of (2) to (4), further comprising a delay measurement camera that acquires the captured image in which the real object and the picture are imaged.

(6) The information processing device according to (1), wherein the control unit measures the delay information on the basis of a time difference between a start or stop of movement of the real object and a display of the picture on the real object.

(7) The information processing device according to (6), further comprising:

a first sensor that is provided in the real object and that detects the start or stop of the movement of the real object;
a second sensor that detects that the picture is displayed on the real object; and
a measurement unit that measures elapsed time from when the first sensor detects the start or stop of the movement of the real object until the second sensor detects that the picture is displayed on the real object, wherein the control unit sets, as the delay information, the elapsed time measured by the measurement unit.

(8) The information processing device according to (7), wherein

the first sensor is an inertial measurement unit (IMU) sensor, and

the second sensor is an optical sensor.

(9) The information processing device according to any one of (1) to (8), further comprising

a detection unit that detects a position of the real object, wherein

the control unit controls a position of drawing a picture, which is superimposed on the real object in and after a next frame, on the basis of the position of the real object which position is detected by the detection unit, and the delay information.

(10) The information processing device according to (9), wherein

the control unit predicts a position, in which a picture superimposed on the real object in and after a next frame is drawn, on the basis of the position of the real object which position is detected by the detection unit and the delay information, and draws the picture in and after the next frame in the predicted position.

(11) The information processing device according to (10), wherein

the detection unit includes an imaging unit that images the real object, and

the control unit detects a position of the real object on the basis of an image acquired by the imaging unit.

(12) The information processing device according to (11), wherein

the detection unit further includes

a reflection marker that is provided on the real object and that reflects light of a specific wavelength, and

a light source that projects the light of the specific wavelength onto the real object, and

the imaging unit detects the light of the specific wavelength which light is reflected by the reflection marker.

(13) The information processing device according to (12), wherein the light of the specific wavelength is infrared light.

(14) The information processing device according to (11), wherein

the imaging unit is a color camera that acquires a color image or a grayscale camera that acquires a grayscale image, and

the control unit detects a position of the real object by detecting a color or a feature from the color image acquired by the color camera or the grayscale image acquired by th

(15) The information processing device according to any one of (1) to (14), further comprising an output unit that outputs a picture drawn by the control unit.

(16) The information processing device according to (5), further comprising

an output unit that outputs a picture drawn by the control unit, wherein

a first frame rate at which the delay measurement camera acquires a captured image is equivalent to or higher than a second frame rate at which the output unit outputs the picture.

(17) The information processing device according to (16), wherein the first frame rate is a multiple of the second frame rate.

(18) The information processing device according to any one of (1) to (17), wherein the information processing device according to any one of (1) to (17), in which the delay information is delay information from detection of a position of the real object to a display of the picture on the real object.

(19) The information processing device according to any one of (15) to (18), wherein the output unit is a projector or a display.

(20) The information processing device according to any one of (1) to (19), wherein the information processing device according to any one of (1) to (19), in which the information processing device is augmented reality (AR) glasses or a virtual reality (VR) device.

(21) The information processing device according to any one of (15) to (20), further comprising

a plurality of the output units, wherein

the control unit controls drawing of a picture, which is output from each of the plurality of output units, on the basis of a display position of a picture displayed on the real object by each of the plurality of output units and a position of the real object.

(22) A drawing control method comprising controlling drawing of a picture displayed on a real object according to delay information based on a result of displaying of a picture on the real object.

(23) A recording medium recording a program for causing a computer to execute a step of controlling drawing of a picture displayed on a real object according to delay information based on a result of displaying of a picture on the real object.

Reference Signs List

1, 2        PROJECTION SYSTEM

| 10 | INFORMATION PROCESSING DEVICE |
| 11 | TOTAL DELAY TIME MEASUREMENT UNIT |
| 12 | PREDICTION AMOUNT DETERMINATION UNIT |
| 13 | PREDICTION AMOUNT STORAGE UNIT |
| 14 | OBJECT POSITION DETECTION UNIT |
| 15 | OBJECT POSITION PREDICTION UNIT |
| 16 | PICTURE DATA GENERATION UNIT |
| 17 | SOUND DATA GENERATION UNIT |
| 18 | INTERFACE (I/F) UNIT |
| 20 | SENSOR |
| 21 | DELAY MEASUREMENT CAMERA |
| 22 | INFRARED CAMERA |
| 30 | OUTPUT DEVICE |
| 31 | PROJECTOR |
| 32 | SPEAKER |
| 33 | INFRARED PROJECTOR |
| 40 | OBJECT |
| 42 | RETROREFLECTIVE MARKER |
| 50 | TABLE |
| 241 | MICROCOMPUTER |
| 242 | OPTICAL SENSOR |
| 243 | IMU SENSOR |
| 244 | MEASUREMENT UNIT |
| 500 | AR GLASSES |
| 502 | TRANSMISSIVE DISPLAY |
| 522 | COLOR CAMERA |
| 600 | VR DEVICE |
| 602, 702 | DISPLAY |
| 800 | INTERACTIVE PROJECTOR |

**Claims**

1. An information processing device comprising a control unit that controls drawing of a picture displayed on a real object according to delay information based on a result of displaying of a picture on the real object.

2. The information processing device according to claim 1, wherein the control unit measures the delay information on the basis of a captured image in which the real object and the picture are imaged.

3. The information processing device according to claim 1, wherein the control unit measures the delay information on the basis of a first captured image in which the real object and a first picture are imaged, and a second captured image in which the real object and a second picture different from the first picture are imaged.

4. The information processing device according to claim 3, wherein the control unit identifies a first distance between a first figure of the real object in the first captured image and a second figure of the first picture in the first captured image, identifies a second distance, for which the real object moves while the picture displayed on the real object is switched from the first picture to the second picture, on the basis of the first figure and a second figure of the real object in the second captured image, and calculates the delay information on the basis of the first distance and the second distance.

5. The information processing device according to claim 2, further comprising a delay measurement camera that acquires the captured image in which the real object and the picture are imaged.

6. The information processing device according to claim 1, wherein the control unit measures the delay information on the basis of a time difference between a start or stop of movement of the real object and a display of the picture on the real object.

7. The information processing device according to claim 6, further comprising:

a first sensor that is provided in the real object and that detects the start or stop of the movement of the real object;

a second sensor that detects that the picture is displayed on the real object; and

a measurement unit that measures elapsed time from when the first sensor detects the start or stop of the movement of the real object until the second sensor detects that the picture is displayed on the real object, wherein the control unit sets, as the delay information, the elapsed time measured by the measurement unit.

8. The information processing device according to claim 7, wherein
the first sensor is an inertial measurement unit (IMU) sensor, and
the second sensor is an optical sensor.

9. The information processing device according to claim 1, further comprising
a detection unit that detects a position of the real object, wherein
the control unit controls a position of drawing a picture, which is superimposed on the real object in and after a next frame, on the basis of the position of the real object which position is detected by the detection unit, and the delay information.

10. The information processing device according to claim 9, wherein
the control unit predicts a position, in which a picture superimposed on the real object in and after a next frame is drawn, on the basis of the position of the real object which position is detected by the detection unit and the delay information, and draws the picture in and after the next frame in the predicted position.

11. The information processing device according to claim 10, wherein
the detection unit includes an imaging unit that images the real object, and
the control unit detects a position of the real object on the basis of an image acquired by the imaging unit.

12. The information processing device according to claim 11, wherein
the detection unit further includes
a reflection marker that is provided on the real object and that reflects light of a specific wavelength, and
a light source that projects the light of the specific wavelength onto the real object, and
the imaging unit detects the light of the specific wavelength which light is reflected by the reflection marker.

13. The information processing device according to claim 12, wherein the light of the specific wavelength is infrared light.

14. The information processing device according to claim 1, further comprising an output unit that outputs a picture drawn by the control unit.

15. The information processing device according to claim 5, further comprising
an output unit that outputs a picture drawn by the control unit, wherein
a first frame rate at which the delay measurement camera acquires a captured image is equivalent to or higher than a second frame rate at which the output unit outputs the picture.

16. The information processing device according to claim 15, wherein the first frame rate is a multiple of the second frame rate.

17. The information processing device according to claim 14, wherein the output unit is a projector or a display.

18. The information processing device according to claim 14, further comprising
a plurality of the output units, wherein
the control unit controls drawing of a picture, which is output from each of the plurality of output units, on the basis of a display position of a picture displayed on the real object by each of the plurality of output units and a position of the real object.

19. A drawing control method comprising controlling drawing of a picture displayed on a real object according to delay information based on a result of displaying of a picture on the real object.

20. A recording medium recording a program for causing a computer to execute a step of controlling drawing of a picture displayed on a real object according to delay information based on a result of displaying of a picture on the real object.

# FIG.1

ONE FRAME

IMAGING
S1

RECOG-
NITION
S2

DRAWING
S3

Vsync
WAITING
PERIOD

OUTPUT
S4

# FIG.2

ONE FRAME

IMAGING
S1        S1'

RECOG-
NITION
S2

DRAWING
S3

Vsync
WAITING
PERIOD

OUTPUT
S4

# FIG.3

ONE FRAME

IMAGING
S1
RECOGNITION
S2  S2'
Vsync
WAITING
PERIOD
DRAWING
S3
OUTPUT
S4

# FIG.4

ONE FRAME

IMAGING
S1
RECOG-
NITION
S2
DRAWING
S3  S3'
Vsync
WAITING
PERIOD
OUTPUT
S4

# FIG.5

# FIG.6

INFORMATION PROCESSING DEVICE — 10

1

11 — TOTAL DELAY TIME MEASUREMENT UNIT

12 — PREDICTION AMOUNT DETERMINATION UNIT

13 — PREDICTION AMOUNT STORAGE UNIT

14 — OBJECT POSITION DETECTION UNIT

15 — OBJECT POSITION PREDICTION UNIT

16 — PICTURE DATA GENERATION UNIT

17 — SOUND DATA GENERATION UNIT

18 — I/F UNIT

SENSOR — 20
INFRARED CAMERA — 22
DELAY MEASUREMENT CAMERA — 21

OUTPUT DEVICE — 30
PROJECTOR — 31
SPEAKER — 32
INFRARED PROJECTOR — 33

OBJECT — 40
RETROREFLECTIVE MARKER — 42

# FIG.7

```
                    START

                      ↓
              ┌──────────────┐
              │   IMAGING    │─── S110
              └──────────────┘
                      ↓
      ┌───────────────────────────────┐
      │   OBJECT POSITION DETECTION    │─── S121
      │   PROCESSING (RECOGNITION)     │
      └───────────────────────────────┘
                      ↓
  NO           ◇ IS POSITION OF ◇
  ←──────────── OBJECT DETECTED? ────── S122
                      │
                     YES
                      ↓
      ┌───────────────────────────────┐
      │ PREDICTION POINT CALCULATION   │─── S123
      │         PROCESSING             │
      └───────────────────────────────┘
                      ↓
              ┌──────────────┐
              │   DRAWING    │─── S130
              └──────────────┘
                      ↓
              ┌──────────────┐
              │   OUTPUT     │─── S140
              └──────────────┘
                      ↓
  NO              ◇ END? ◇ ─────────── S150
  ←──────────────────│
                     YES
                      ↓
                    END
```

# FIG.8

```
START

↓

IS MEASUREMENT          NO
STARTING EVENT    ───────→
GENERATED?  ～S201

↓ YES

START TOTAL DELAY  ～S202
MEASUREMENT

↓

                          ～S203
DOES CERTAIN        YES
TIME ELAPSE?   ──────────────→   RESET MEASUREMENT TIME  ～S204

↓ NO

IS MEASUREMENT       NO
ENDING EVENT    ───────→
GENERATED?  ～S205

↓ YES

END TOTAL DELAY  ～S206
MEASUREMENT

↓

CALCULATE TOTAL DELAY TIME  ～S207

↓

CALCULATE PREDICTION AMOUNT  ～S208
FROM TOTAL DELAY TIME

↓

UPDATE PREDICTION AMOUNT  ～S209
SETTING VALUE

↓

            NO
END?   ──────────→
～S210

↓ YES

END
```

EP 3 852 070 A1

# FIG.9

START

S161
INPUT IMAGE

G1
K1

S162
BINARIZATION

G2
K2

S163
EXTRACT CONTOUR

G2
K3

S164
CALCULATE BARYCENTRIC COORDINATE

G2
K3
K4

RETURN

26

# FIG.10

$$a_3 = \frac{\Delta V_2}{\Delta T}$$

$$a_2 = \frac{\Delta V_1}{\Delta T}$$

$$a_1 = \frac{\Delta V_0}{\Delta T}$$

$t_{+1}$

$t_0$

$t_{-1}$

$t_{-2}$

$t_{-3}$

Q

40

40

40

40

40

40

# FIG.11

(TIMING t = t1)    G11

DistA

Z12

Z11

(TIMING t = t2)    G12

Z22

DistA    DistB

Z21

# FIG.12

# FIG.13

# FIG.14

# FIG.15

INFORMATION PROCESSING DEVICE (10)

- 11 — TOTAL DELAY TIME MEASUREMENT UNIT
- 12 — PREDICTION AMOUNT DETERMINATION UNIT
- 13 — PREDICTION AMOUNT STORAGE UNIT
- 14 — OBJECT POSITION DETECTION UNIT
- 15 — OBJECT POSITION PREDICTION UNIT
- 16 — PICTURE DATA GENERATION UNIT
- 17 — SOUND DATA GENERATION UNIT
- 18 — I/F UNIT

SENSOR (20)
- INFRARED CAMERA — 22

OUTPUT DEVICE (30)
- PROJECTOR — 31
- SPEAKER — 32
- INFRARED PROJECTOR — 33

OBJECT (40)
- RETROREFLECTIVE MARKER — 42
- MICROCOMPUTER
  - OPTICAL SENSOR — 242
  - IMU SENSOR — 243
  - MEASUREMENT UNIT — 244
  - 241

# FIG.16

START

IS START OR
STOP OF MOVEMENT
DETECTED? — S221

NO

YES

START DELAY MEASUREMENT — S222

S223

DOES CERTAIN
TIME ELAPSE?

YES

NO

RESET MEASUREMENT TIME — S224

IS PROJECTION
OF PICTURE
DETECTED? — S225

NO

YES

END DELAY MEASUREMENT — S226

TRANSMIT TOTAL DELAY TIME — S227

END? — S228

NO

YES

END

# FIG.17

(TIMING t = t0)

(TIMING t = t1)

(TIMING t = t2)

# FIG.18

nTH FRAME OF SYSTEM A

nTH FRAME OF SYSTEM B

SYSTEM A

IMAGING   RECOGNI-TION   DRAWING   OUTPUT

IMAGING   RECOGNI-TION   DRAWING   OUTPUT

n-1TH FRAME

nTH FRAME

SYSTEM B

IMAGING   RECOGNI-TION   DRAWING   OUTPUT

IMAG-ING   RECOGNI-TION   DRAWING   OUTPUT

REFLECT PREDICTION AMOUNT SETTING VALUE IN nTH FRAME

FOR SYSTEM A

START MEAS-UREMENT   MEASUREMENT   END MEASURE-MENT

REFLECT PREDICTION AMOUNT SETTING VALUE IN nTH FRAME

FOR SYSTEM B

START MEASURE-MENT   MEASUREMENT   END MEASURE-MENT

34

# FIG.19

# FIG.20

# FIG.21

40   M700

702

# FIG.22

800

M800

40

M8

# FIG.23

COMPUTER 1000

CPU 1100

RAM 1200

ROM 1300

HDD 1400
PROGRAM DATA

COMMUNICA-TION INTERFACE 1500

INPUT/OUTPUT INTERFACE 1600

1550

INPUT/OUTPUT DEVICE 1650

## INTERNATIONAL SEARCH REPORT

| International application No. |
|---|
| PCT/JP2019/031786 |

**A. CLASSIFICATION OF SUBJECT MATTER**
Int.Cl. G06T19/00(2011.01)i, G09G5/00(2006.01)i, G09G5/38(2006.01)i, H04N5/74(2006.01)i

According to International Patent Classification (IPC) or to both national classification and IPC

**B. FIELDS SEARCHED**

Minimum documentation searched (classification system followed by classification symbols)
Int.Cl. G06T19/00, G09G5/00, G09G5/38, H04N5/74

Documentation searched other than minimum documentation to the extent that such documents are included in the fields searched
Published examined utility model applications of Japan      1922-1996
Published unexamined utility model applications of Japan    1971-2019
Registered utility model specifications of Japan            1996-2019
Published registered utility model applications of Japan    1994-2019

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X<br>A | JP 2006-285789 A (CANON INC.) 19 October 2006, paragraphs [0095]-[0113], fig. 7, 8<br>& US 2006/0244820 A1, paragraphs [0125]-[0143], fig. 7, 8 | 1-3, 6, 9, 14, 17-20<br>4-5, 7-8, 10-13, 15-16 |
| A | JP 2016-151612 A (UNIV OF ELECTRO-COMMUNICATIONS) 22 August 2016, paragraphs [0035]-[0037], fig. 7 (Family: none) | 1-20 |

☒ Further documents are listed in the continuation of Box C.　　☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02.10.2019 | 15.10.2019 |

| Name and mailing address of the ISA/<br>Japan Patent Office<br>3-4-3, Kasumigaseki, Chiyoda-ku,<br>Tokyo 100-8915, Japan | Authorized officer<br><br><br>Telephone No. |
|---|---|

Form PCT/ISA/210 (second sheet) (January 2015)

**INTERNATIONAL SEARCH REPORT**

International application No.

PCT/JP2019/031786

| C (Continuation). DOCUMENTS CONSIDERED TO BE RELEVANT | | |
|---|---|---|
| Category* | Citation of document, with indication, where appropriate, of the relevant passages | Relevant to claim No. |
| A | JP 2015-185973 A (KONICA MINOLTA, INC.) 22 October 2015, paragraphs [0045]-[0054], fig. 2, 3 (Family: none) | 1-20 |
| A | JP 2008-299669 A (CANON INC.) 11 December 2008, paragraphs [0114]-[0124], fig. 7 & US 2008/0297437 A1, paragraphs [0128]-[0139], fig. 7 | 1-20 |

Form PCT/ISA/210 (continuation of second sheet) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2016151612 A